(19) Europäisches Patentamt
European Patent Office
Office européen des brevets

(11) **EP 2 710 552 B1**

(12) **FASCICULE DE BREVET EUROPEEN**

(45) Date de publication et mention
de la délivrance du brevet:
**16.09.2015 Bulletin 2015/38**

(51) Int Cl.:
*G06T 7/00* *(2006.01)*   *G06T 5/30* *(2006.01)*
*G06T 5/40* *(2006.01)*   *G06T 5/50* *(2006.01)*

(21) Numéro de dépôt: **12722108.3**

(22) Date de dépôt: **10.05.2012**

(86) Numéro de dépôt international:
**PCT/EP2012/058607**

(87) Numéro de publication internationale:
**WO 2012/156262 (22.11.2012 Gazette 2012/47)**

(54) **METHODE DE DETERMINATION DES MARQUAGES EN RELIEF PRESENTS SUR LA SURFACE EXTERIEURE DU FLANC D'UN PNEUMATIQUE**

VERFAHREN ZUR BESTIMMUNG VON MARKIERUNGEN IN EINEM RELIEF AUF DER AUSSENSEITE DER SEITENWAND EINES REIFENS

METHOD FOR DETERMINING MARKINGS IN RELIEF ON THE OUTER SURFACE OF THE SIDEWALL OF A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2011 FR 1154348**

(43) Date de publication de la demande:
**26.03.2014 Bulletin 2014/13**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **NOYEL, Guillaume**
**F-63040 Clermont-Ferrand cedex 9 (FR)**
• **ZANELLA, Jean-Paul**
**F-63040 Clermont-Ferrand cedex 9 (FR)**
• **JOLY, Alexandre**
**F-63040 Clermont-Ferrand cedex 9 (FR)**

(74) Mandataire: **Roussy, Delphine**
**Manufacture Française des**
**Pneumatiques Michelin**
**23, place des Carmes-Déchaux**
**DGD/PI - F35 - Ladoux**
**63040 Clermont-Ferrand Cedex 9 (FR)**

(56) Documents cités:
**EP-A1- 2 077 442   WO-A1-02/48952**

• **MAK K L ET AL: "Fabric defect detection using morphological filters", IMAGE AND VISION COMPUTING, ELSEVIER, GUILDFORD, GB, vol. 27, no. 10, 2 septembre 2009 (2009-09-02), pages 1585-1592, XP026171162, ISSN: 0262-8856, DOI: 10.1016/J.IMAVIS.2009.03.007 [extrait le 2009-04-05]**
• **CHANG J ET AL: "CORK QUALITY CLASSIFICATION SYSTEM USING A UNIFIED IMAGE PROCESSING AND FUZZY-NEURAL NETWORK METHODOLOGY", IEEE TRANSACTIONS ON NEURAL NETWORKS, IEEE SERVICE CENTER, PISCATAWAY, NJ, US, vol. 8, no. 4, 1 juillet 1997 (1997-07-01) , pages 964-974, XP000656483, ISSN: 1045-9227, DOI: 10.1109/72.595897**
• **SÉBASTIEN LEFÈVRE: "Beyond morphological size distribution", JOURNAL OF ELECTRONIC IMAGING, vol. 18, no. 1, 1 janvier 2009 (2009-01-01), page 013010, XP055015460, ISSN: 1017-9909, DOI: 10.1117/1.3099707**
• **ITO M ET AL: "MORPHOLOGICAL OPERATIONS BY LOCALLY VARIABLE STRUCTURING ELEMENTS AND THEIR APPLICATIONS TO REGION EXTRACTION IN ULTRASOUND IMAGES", SYSTEMS & COMPUTERS IN JAPAN, WILEY, HOBOKEN, NJ, US, vol. 34, no. 3, 1 mars 2003 (2003-03-01), pages 33-43, XP001159586, ISSN: 0882-1666, DOI: 10.1002/SCJ.10196**

EP 2 710 552 B1

• SHANMIN YANG ET AL: "A multi-scale morphologic runway detector", COMPUTER ENGINEERING AND TECHNOLOGY (ICCET), 2010 2ND INTERNATIONAL CONFERENCE ON, IEEE, PISCATAWAY, NJ, USA, 16 avril 2010 (2010-04-16), pages V4-524, XP031689642, ISBN: 978-1-4244-6347-3

## Description

L'invention concerne le domaine de la fabrication des pneumatiques, et s'inscrit de manière plus générale dans le cadre des opérations de contrôle de l'aspect extérieur ou intérieur des pneumatiques en cours ou en fin du processus de fabrication, dans le but d'en déterminer la conformité par rapport à des références de contrôle établies.

Les moyens industriels de contrôle automatiques développés parles manufacturiers de pneumatiques, et destinés notamment à assister les opérateurs chargés du contrôle visuel, font largement appel à des techniques de traitement d'image.

Les méthodes employées pour effectuer ces traitements consistent, en règle générale, à comparer une image en deux ou préférentiellement en trois dimensions de la surface du pneumatique à inspecter, avec une image de référence en deux et préférentiellement en trois dimensions de la surface dudit pneumatique.

Aussi, une des étapes de ce processus consiste, de manière connue, à acquérir l'image en trois dimensions de la surface du pneumatique, à l'aide par exemple, de moyens basés sur le principe de la triangulation optique, mettant par exemple en oeuvre un capteur 2D couplé à une source d'éclairage de type laser.

L'image topographique de la surface du pneumatique est en règle générale une image bidimensionnelle, dite à niveau de gris, dans laquelle, à tout point, i.e. à tout pixel (x, y) de l'image, est associé une valeur f(x, y), appelée niveau de gris, et représentant l'altitude de ce point par rapport à la surface. Cette valeur de niveau de gris peut utilement être codée sur 8, ou 16 voire 32 bits pour une meilleure dynamique. Pour un codage sur 8 bits, la valeur 255 (blanc) correspond à l'altitude la plus haute, et la valeur 0 (noir), correspond à l'altitude la plus basse.

La poursuite du processus d'analyse de l'image obtenue consiste alors, entre autre, à identifier les reliefs de la surface à inspecter. Cette étape est particulièrement importante dans le cadre de l'analyse de la partie externe du pneumatique en ce que les marquages portés par le flanc doivent être précisément localisés et identifiés, afin de ne pas être considérés comme des anomalies de surface.

Ces marquages sont formés par des motifs en relief dépassant de quelques dixièmes de millimètre la surface moyenne du flanc.

Une première méthode, connue, pour extraire ces motifs en relief, consiste à déterminer la valeur moyenne du bombé du flanc, et à assimiler à des motifs de gravure la différence entre le bombé réel du flanc et le bombé moyen.

On observe toutefois que le bombé réel du flanc peut présenter des variations circonférentielles dont l'amplitude dépasse la surélévation des motifs portés par le flanc, entraînant de ce fait une mauvaise détection des motifs dans les zones considérées.

La méthode selon l'invention a pour objet d'apporter une solution au problème posé.

Cette méthode d'extraction des motifs de marquage en relief figurant sur la surface du flanc d'un pneumatique repose sur l'assimilation de l'image en niveau de gris figurant les reliefs des motifs de marquage à une image en noir et blanc, sur laquelle il devient possible, dans le but d'extraire les informations recherchées, d'utiliser largement les propriétés des opérateurs morphologiques, après les avoir adaptés aux spécificités du pneumatique.

Les opérateurs morphologiques couramment utilisés sont des ouvertures et des fermetures morphologiques, des dilatations ou des érosions morphologiques, utilisant des éléments structurants adaptés.

Un élément structurant est un ensemble utilisé pour sonder l'image étudiée. On peut le voir comme un outil qui permettrait d'éroder (i.e. enlever de la matière) ou de dilater (i.e. ajouter de la matière) à une image. Ainsi, la dilatation de la fonction f (i.e. l'image à niveaux de gris) par un élément structurant B, notée $\delta_B(f)$, est la fonction qui donne à tout pixel $x \in E$ la valeur maximale de l'image $f$ dans la fenêtre d'observation définie par B, telle que : $\delta_B(f)(x) = \sup\{f(x - y), y \in B\}$.

De la même manière, l'érosion de la fonction f (i.e. l'image à niveaux de gris) par l'élément structurant B, notée $\varepsilon_B(f)$, est la fonction qui donne à tout pixel $x \in E$ la valeur minimale de l'image f dans la fenêtre d'observation définie par B, telle que : $\varepsilon_B(f)(x) = \inf\{f(x - y), y \in B\}$.

Une ouverture morphologique par adjonction $\gamma_B$ est définie comme la composition d'une érosion $\varepsilon_B$ avec une dilatation $\delta_B$ pour un élément structurant B telle que : $\gamma_B(f) = \delta_B \circ \varepsilon_B(f)$. A l'inverse, une fermeture morphologique $\phi_B$ est définie comme la composition d'une dilatation $\delta_B$ avec une érosion $\varepsilon_B$ pour un élément structurant B telle que : $\phi_B(f) = \varepsilon_B \circ \delta_B(f)$.

L'opération qui consiste à faire la différence entre une image f et la transformée de cette image par ouverture morphologique $\gamma_B$, connue également sous le nom de top-hat, est notée $\rho_B(f) = f - \gamma_B(f)$

La méthode selon l'invention prévoit les étapes au cours desquelles :

A- on capture l'image tridimensionnelle de ladite surface du flanc d'un pneumatique en affectant à chaque pixel de l'image une valeur de niveau de gris proportionnelle à l'élévation de ce point par rapport à ladite surface, pour obtenir une image de départ,

B- à l'aide d'éléments structurants linéaires de tailles successivement croissante et orientés dans la direction circonférentielle, on réalise une série d'ouvertures morphologiques de l'image de la surface de départ,

C- on soustrait la valeur d'une image obtenue après ouverture morphologique avec un élément structurant, de la valeur de l'image obtenue après ouverture morphologique à l'aide de l'élément structurant de taille immédiatement inférieure, de manière à obtenir une succession d'images mises à plat par différence, en initialisant la procédure par la soustraction de l'image obtenue à l'aide de l'élément structurant de plus faible taille de l'image de départ,

D- on réalise un seuillage des images mises à plat par différence, pour obtenir des images binaires,

E- on fait l'union ensembliste de chacune des images binaires pour obtenir une image binaire finale, dans laquelle seuls les motifs de marquage apparaissent en relief.

On tire partie du fait que les pixels des images du flanc selon la direction circonférentielle ont approximativement la même altitude. En utilisant des éléments structurants de taille judicieusement choisie, on supprime les objets en bosse ayant une taille supérieure à la taille de l'élément structurant, ce qui permet, par différence, de révéler successivement les motifs de longueur circonférentielle croissante en s'affranchissant du bombé circonférentiel du flanc, assimilé ici à la géométrie du flanc dans un plan radial.

Pour plus de commodité de travail, il est judicieux de dérouler l'image de la surface du flanc dans un repère orthogonal dans lequel l'axe des abscisses représente les valeurs circonférentielle, et l'axe des ordonnées représente les valeurs radiales.

De manière avantageuse, dans le cas de l'analyse de la surface d'un pneumatique, trois itérations successives d'ouverture de l'image de la surface à l'aide d'un premier, d'un deuxième et d'un troisième élément structurant, semblent suffisantes pour extraire l'information désirée au cours de l'étape B.

En fonction de la définition de l'image, on choisira alors la taille des éléments structurants de sorte que le premier élément structurant linéaire soit formé d'un nombre de pixels correspondant à une longueur comprise entre 4 et 10 mm, que le deuxième élément structurant linéaire soit formé d'un nombre de pixels correspondant à une longueur comprise entre 15 et 30 mm, et que le troisième élément structurant linéaire soit formé d'un nombre de pixels correspondant à une longueur comprise entre 200 et 400 mm.

Pour améliorer le filtrage à l'issue de l'étape C, on peut avantageusement transformer au moins une image mise à plat en effectuant une ouverture morphologique à l'aide d'un élément structurant linéaire orienté dans la direction radiale, et soustraire cette image résultante de ladite image mise à plat.

Dans ce cas, l'élément structurant pourra avantageusement, en fonction de la définition de l'image, être formé d'un nombre de pixels correspondant à une longueur comprise entre 15 et 30 mm.

En s'appuyant sur la variation de hauteur induite par une variation de nuance de gris, il est particulièrement intéressant, au cours de l'étape D, d'effectuer un seuillage du niveau de gris correspondant à une variation de hauteur supérieure ou égale à 0,15mm. Dans le cas du pneumatique, cette hauteur est inférieure à la hauteur moyenne des motifs que l'on cherche à repérer.

De manière optionnelle, pour s'affranchir des détections à tort on peut, à l'issue de l'étape D, éliminer de l'image binaire les motifs ne rentrant pas dans les critères de hauteur correspondant usuellement aux motifs graphiques et ornementaux que l'on cherche à sélectionner sur le flanc d'un pneumatique. Pour cela :

- on identifie les motifs disjoints dans l'image binaire de la surface,
- on déterminé l'image du bombé de la surface de départ,
- pour un motif considéré, on soustrait de la valeur de niveau de gris des pixels formant ce motif dans l'image de départ la valeur de niveau de gris des pixels correspondants à ce motif dans l'image du bombé, de manière à obtenir une mise à plat du motif,
- on calcule la valeur moyenne et l'écart type des niveaux de gris dudit motif mis à plat,
- dans l'image binaire, on supprime ce motif lorsque :

  ○ la valeur moyenne des niveaux de gris n'est pas comprise dans un intervalle donné et
  ○ l'écart type des niveaux de gris est supérieur à un seuil prédéterminé, de manière à obtenir une image binaire corrigée, dans laquelle les motifs détectés à tort sont supprimés.

Pour déterminer le bombé de la surface du flanc, on effectue alternativement une série d'ouvertures morphologiques de l'image de départ à l'aide d'éléments structurants linéaires de taille croissante et orientés dans la direction circonférentielle, de manière à obtenir une image du bombé de la surface dans laquelle les motifs en sailli et les objets en creux et en bosse sont supprimés.

A l'expérience, dans le cas des pneumatiques, on pourra utilement effectuer successivement : une ouverture morphologique de l'image de départ à l'aide d'un élément structurant linéaire comprenant un nombre de pixels correspondant à une longueur comprise entre 4 et 10 mm, une ouverture morphologique de l'image précédente à l'aide d'un élément structurant comprenant un nombre de pixels correspondant à une longueur comprise entre 200 et 400 mm, et une ouverture morphologique de l'image précédente à l'aide d'un élément structurant comprenant un nombre de pixels correspondant à une longueur comprise entre 500 et 800 mm.

Pour éliminer les valeurs de niveau de gris anormales on pourra également, avant de soustraire l'image du bombé de l'image de départ, encadrer chacun des motifs considérés par une boite englobante ne contenant que le motif identifié considéré, et réaliser une mise à plat de l'imagette contenant le motif considéré.

Pour les pneumatiques de dimensions usuelles, l'intervalle de la moyenne des niveaux de gris pourra avantageusement correspondre à une variation de hauteur comprise entre 0,2mm et 0,3mm, et la valeur du seuil de l'écart type des niveaux de gris correspond à une variation de hauteur inférieure ou égale à 0,2mm.

EP 2 077 442 A1 décrit un système pour séparer des caractéristiques des pneumatiques utilisant des filtres non-morphologiques.

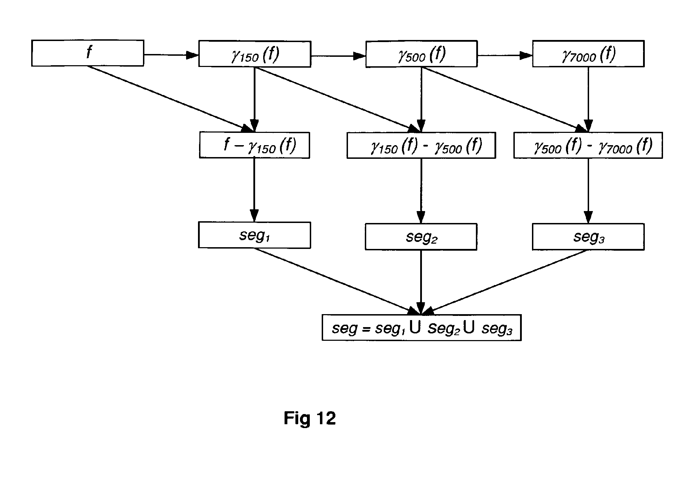

La description qui suit a pour objet de donner les indications détaillées sur la mise en oeuvre de la méthode basée sur un exemple, et s'appuie sur les figures 1 à 16, dans lesquelles :

- la figure 1 représente une image bidimensionnelle à niveau de gris de la surface topographique du flanc d'un pneumatique
- la figure 2 représente la même image après une première ouverture morphologique,
- la figure 3 représente l'image de départ après soustraction de l'image de la figure 2,
- la figure 4 représente l'image binaire de l'image de la figure 3 sur laquelle a été réalisée préalablement un top-hat à l'aide d'un élément structurant radial,
- la figure 5 représente l'image de départ transformée à l'aide d'une deuxième ouverture morphologique,
- la figure 6 représente l'image de la figure 2 après soustraction de l'image de la figure 5,
- la figure 7 représente l'image binaire de l'image de la figure 6,
- la figure 8 représente l'image de départ transformée à l'aide d'une troisième ouverture morphologique,
- la figure 9 représente l'image de la figure 5 après soustraction de l'image de la figure 8,
- la figure 10 représente l'image binaire segmentée par seuillage de l'image de la figure 9,
- l'image de la figure 11 représente l'union des images des figures 4, 7 et 10.
- la figure 12 représente un diagramme fonctionnel du traitement de l'image de départ selon l'invention,
- la figure 13 représente l'image du bombé du flanc,
- la figure 14 représente l'image de la figure 7 dans laquelle des motifs en relief sont inclus dans des boites englobantes,
- la figure 15 représente l'image de la figure 13 corrigée,
- la figure 16 représente l'union ensembliste des images binaires corrigées.

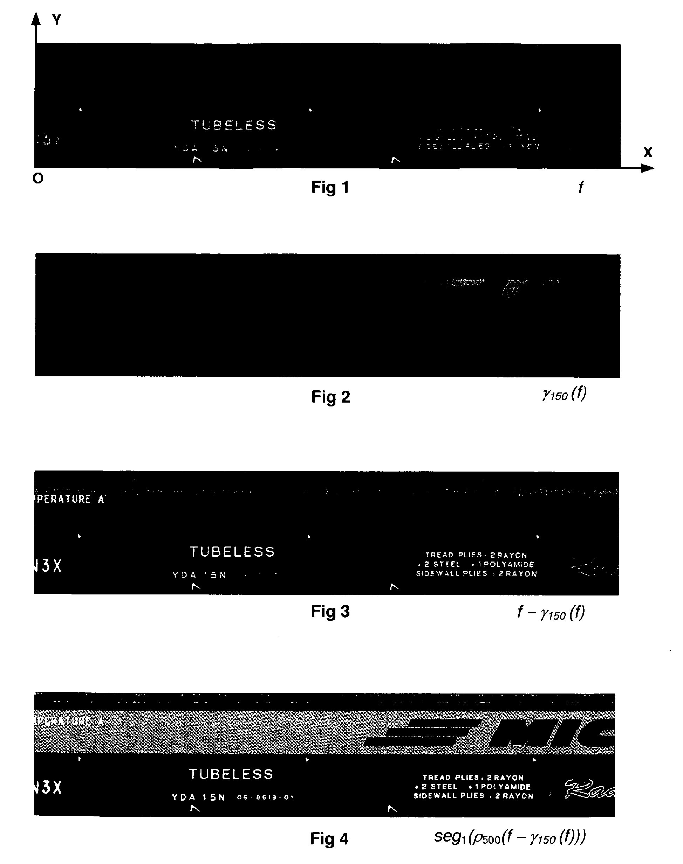

L'image de la figure 1 représente une vue partielle de l'image du flanc d'un pneumatique. Cette image est obtenue à l'aide d'un moyen faisant appel à des technologies connues en elles-mêmes telles que la triangulation laser.

En règle générale, l'image bidimensionnelle de la surface d'un pneumatique est une image en niveau de gris, telle que représentée à la figure 1, dans laquelle, à tout point ou pixel $x = (i, j)$ du plan ($E = [1,2,...] \times [1,2,...]$, avec $E \subset \square^2$) représenté sous forme d'une grille de point (c'est-à-dire un tableau 2D), est associé une valeur $f(x) \subset T$ avec $T \subset \square$. Généralement, T est constituée de valeurs entières comprises entre 0 et 255. La valeur de niveau de gris représente l'altitude de ce point par rapport à la surface topographique du pneumatique.

Pour un pneumatique tourisme de dimension standard on calibre l'image de manière à ce que la variation d'une unité de niveau de gris corresponde à une hauteur de 0,01 mm environ.

Le nombre de pixels de l'image, dépend naturellement du choix de la caméra utilisée et du mode de saisie, mais il est courant de réaliser des images comprenant 40 000 x 5000 pixels pour représenter l'ensemble du flanc.

Pour des raisons de commodité de calcul, on transforme les coordonnées polaires de l'image circulaire du flanc du pneumatique en coordonnées orthogonales. L'image de la figure 1 est représentée dans ledit repère orthogonal dans lequel l'axe des abscisses OX représente les valeurs circonférentielles et l'axe des ordonnées OY représente les valeurs radiales.

L'étape suivante de la méthode selon l'invention, consiste à effectuer des séries d'ouvertures morphologiques de l'image de la surface à l'aide d'un élément structurant ayant la forme d'un segment orienté dans la direction circonférentielle, i.e. selon l'axe OX, pour s'affranchir du bombé de la surface du flanc, en considérant que ce bombé est sensiblement le même pour une valeur radiale donnée.

L'élément structurant est de petite taille par rapport aux variations circonférentielles dudit bombé, ce qui permet de s'affranchir également des inconvénients cités en introduction concernant la variation circonférentielle du bombé.

La taille des éléments structurants permet enfin de sélectionner les motifs en relief que l'on veut détacher de la surface du flanc.

Ainsi, dans le cadre de la présente description on utilise successivement un premier élément structurant comprenant un nombre de pixels correspond à une longueur comprise entre 4 mm et 10 mm ; ce qui correspond à approximativement 150 pixels. Cette taille permet de sélectionner, comme on le verra par la suite, les écritures comprenant des caractères de petite dimension.

Le deuxième élément structurant comprend un nombre de pixel correspondant à une longueur comprise entre 15 mm et 30 mm, ce qui dans le cadre de l'exemple servant de support à la présente description représente environ 500 pixel. Cette taille permet de sélectionner les motifs de plus grande surface correspondant aux lettres et aux ornements figurant sur le flanc.

Le troisième élément structurant comprend un nombre de pixels correspondant à une longueur comprise entre 200 mm et 400 mm, qui correspondent à environ 7000 pixels, et qui permet de sélectionner les éléments décoratifs s'étalant sur la circonférence tels que des bandeaux ou des séries de caractère jointifs.

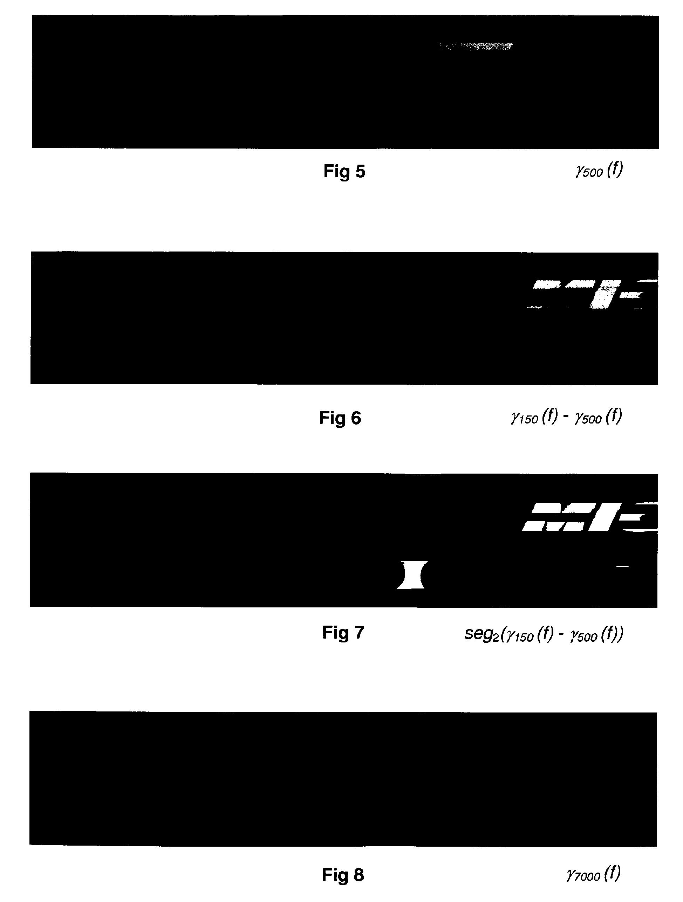

On réalise la série d'ouverture morphologique de la surface f, notées respectivement $\gamma_{150}(f)$, $\gamma_{500}(f)$, et $\gamma_{7000}(f)$. Les images obtenues sont reproduites respectivement sur les figures 2, 5 et 8. On observe que sur la figure 2 les caractères formant les inscriptions réglementaires ont disparus. Les caractères figurant la marque ont disparu sur la figure 5. Et la figure 8 ne comprend plus aucun caractères ni motifs décoratifs.

En effectuant la différence entre l'image obtenue par ouverture morphologique à l'aide d'un élément structurant et l'image obtenue après ouverture morphologique à l'aide de l'élément structurant de taille immédiatement supérieure on obtient une succession d'images, mises à plat par différence, dans lesquelles seuls les motifs ayant disparu d'une ouverture à une autre demeurent.

La différence entre deux images consiste, pour chacun des pixels *i, j* de l'image, à effectuer la différence de niveau de gris. On observera qu'au cours de cette opération, l'image résultante est une image en relief dans laquelle les motifs apparaissent sur un plan et non plus sur une surface bombée.

On initialise le calcul en faisant la différence entre l'image obtenue par ouverture morphologique de l'image de départ f à l'aide de l'élément structurant de plus faible taille $\gamma_{150}(f)$, et de l'image de départ *f*.

Ces mises à plat sont notées respectivement $f - \gamma_{150}(f)$, $\gamma_{150}(f)-\gamma_{500}(f)$ et $\gamma_{500}(f)-\gamma_{7000}(f)$, et sont représentées aux figures 3, 6 et 9. On observe sur ces images que les motifs en relief réapparaissent successivement.

Pour sélectionner les motifs recherchés, on réalise un seuillage de chacune de ces images de manière à obtenir des images binaires dans lesquelles les motifs apparaissent en blanc et le fond en noir.

Cette opération est réalisée en affectant la valeur de niveau de gris la plus élevée (blanc) aux pixels dont le niveau de gris est supérieur à un seuil donné, et la valeur zéro (noir) aux pixels dont la valeur de gris est inférieure à ce seuil.

Pour éviter les détections à tort, ce seuil doit correspondre à une hauteur juste inférieure à la hauteur minimale des motifs, sans être pour autant trop faible, de manière à éviter de considérer comme des motifs en relief des variations de hauteurs insignifiantes. Pour un pneumatique tourisme de dimension courante, ce seuil est d'environ 0,15 mm, ce qui correspond approximativement à une quinzaine d'unité de niveaux de gris.

Ces images binaires sont notées respectivement $seg_1(f-\gamma_{150}(f))$, $seg_2(\gamma_{150}(f)-\gamma_{500}(f))$ et $seg_3(\gamma_{500}(f)-\gamma_{7000}(f))$.

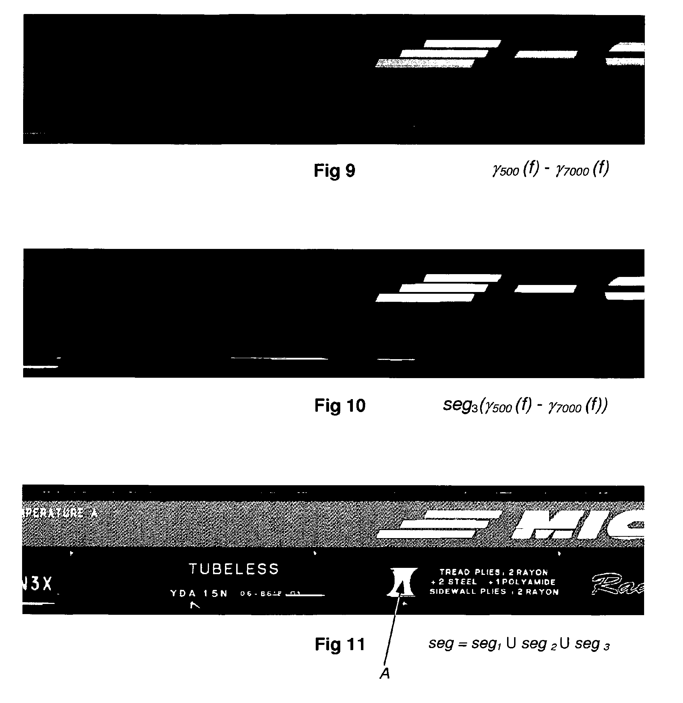

Les figures 7 et 10 illustrent les images binaires $seg_2(\gamma_{150}(f)-\gamma_{500}(f))$ et $seg_3(\gamma_{500}(f)-\gamma_{7000}(f))$, obtenues après segmentation des images mises à plat et illustrées par les figures 6 et 9.

De manière à améliorer la détection des motifs, en éliminant les petites anomalies de détection provenant de petites irrégularités circonférentielles telles que des bavures, on peut, de façon optionnelle, réaliser une série d'opérations supplémentaires sur l'image mise à plat.

Ces opérations consistent à réaliser un top-hat de l'image mise à plat à l'aide d'un élément structurant linéaire orienté dans la direction radiale. La taille de cet élément structurant, dans le cas d'un pneumatique tourisme de dimension courante, peut utilement être comprise entre 15 et 30 mm ce qui correspond dans le cas de l'exemple servant de support à la présente description à environ 500 pixels.

Cette image résultante, dans le cas de la première image mise à plat, est notée $\rho_{500}(f-\gamma_{150}(f)) = (f-\gamma_{150}(f))-\gamma_{500}(f-\gamma_{150}(f))$, et apparaît sous sa forme binaire, $seg_1(\rho_{500}(f-\gamma_{150}(f))$, à la figure 4.

Pour obtenir l'image contenant tous les motifs en reliefs recherchés, on fait l'union ensembliste des images binaires. Cette image binaire finale notée $seg = seg_1 \cup seg_2 \cup seg_3$ est illustrée à la figure 11.

Il convient de remarquer à ce stade de la description d'un mode de réalisation de l'invention, que le nombre d'ouvertures morphologiques, d'images mises à plat et d'images binaires n'est pas limité à 3, et qu'il peut être augmenté ou réduit au choix de l'utilisateur de la méthode selon l'invention. La conduite des étapes de calculs reste la même, et les résultats obtenus sont de même nature. Il s'avère néanmoins que cette limitation à trois ouvertures morphologiques est particulièrement bien adaptée pour le cas des pneumatiques tourismes de dimension courante. L'augmentation du nombre d'étapes, qui se fera nécessairement au détriment du temps de calcul, peut permettre de résoudre le cas des pneumatiques de plus grande dimension présentant des ornements graphiques particuliers ou dans lesquels les tailles ou les hauteurs des marquages en relief varient fortement.

On observe toutefois sur l'image de la figure 11, que des éléments en reliefs peuvent apparaître à tort sur les images binaires obtenues au cours des étapes décrites précédemment. Ces éléments correspondent à des zones surélevées localement et qui sont indûment assimilées à des motifs. Ainsi, la zone A située entre les deux plaquettes et repérée d'une flèche est susceptible de constituer une détection à tort.

Il peut être alors utile de faire disparaître de l'image ces éléments anormaux à l'aide d'opérations mettant en oeuvre les opérateurs morphologiques présentés ci-dessus.

Pour atteindre cet objectif, on part de l'observation que les motifs en relief que l'on cherche à conserver, qu'ils soient des motifs décoratifs ou qu'ils soient formés par des séquences de caractères alphanumériques, ont sensiblement une hauteur régulière et identique. Il suffira alors d'éliminer de l'image binaire $seg_i$ les zones présentant une hauteur anormale ou des variations de hauteur très dispersées, pour obtenir une image binaire corrigée, $seg_i^{cor}$.

La première étape de ce processus optionnel consiste à identifier les motifs apparaissant en relief sur l'image binaire $seg_i$, et qui apparaissent en blanc sur le fond noir de ladite image. On attribue un numéro d'identification à chacun de ces motifs et à chacun des pixels constituant ce motif. On veillera à ce que deux motifs disjoints ne soient pas identifiés par le même numéro. On entend ici par disjoints des motifs séparés entre eux par des pixels appartenant au fond du relief de couleur noire et dont la valeur de niveau de gis est égale à zéro, de sorte qu'il n'est pas possible de se déplacer de manière continue d'un motif quelconque à un autre motif quelconque sans franchir un espace de couleur noire.

On détermine ensuite le bombé de la surface du flanc à partir de la surface de départ *f.* Pour ce faire, on procède alternativement à une série d'ouvertures et de fermetures morphologiques de la surface de départ f, à l'aide d'éléments structurants linéaires orientés dans la direction circonférentielle et dont la taille est croissante, de manière à obtenir une surface dans laquelle les motifs en surélévation, ainsi que les creux anormaux sont éliminés. Cette opération est notée $\phi_{es1} \circ \gamma_{es2} \circ \phi_{es3} \circ ...... \circ \gamma_{esn}(f)$, dans laquelle $es1 \geq es2 \geq es3 \geq .... esi... \geq esn.$

Le nombre d'ouverture et de fermeture n'est pas limitatif, mais on observe que le résultat obtenu ne se modifie plus de manière significative au delà d'un nombre limité d'opérations. La longueur des éléments structurants est adaptée, comme précédemment, à la taille des motifs en relief présents à la surface du flanc.

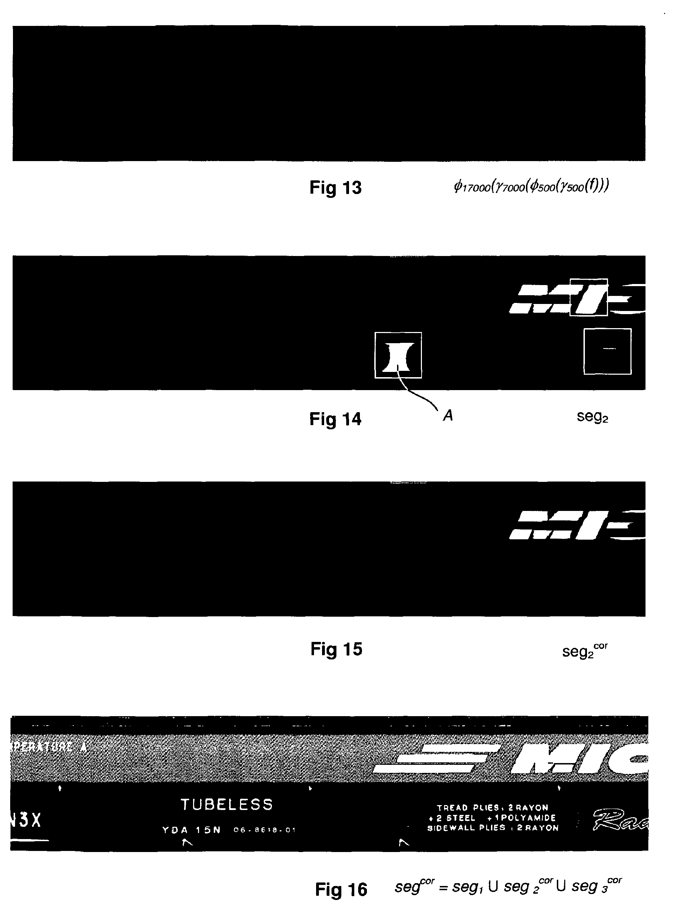

Dans l'exemple qui suit, il est apparu qu'une série comprenant deux ouvertures morphologiques et deux fermetures morphologiques s'avérait suffisante pour obtenir un résultat significatif. Les éléments structurants sont adaptés en conséquence, et ont une taille dont le nombre de pixels correspond à des longueurs variant de quelques millimètres à quelques centaines de millimètres. La figure 13 illustre l'image du bombé de l'image *f* de la figure 1, dans laquelle les éléments structurants comprennent successivement 500, 500, 7000 et 17000 pixels, $bombé\ (f) = \phi_{17000}\ (\gamma_{7000}(\phi_{500}(\gamma_{500}(f))))$.

On peut aisément identifier les pixels de l'image de départ et les pixels de l'image du bombé portant le même label que le motif que l'on cherche à examiner.

On soustrait alors de la valeur de niveau de gris des pixels constituant ledit motif et appartenant à l'image de départ, la valeur de niveau de gris des pixels du même motif et appartenant à l'image du bombé obtenue précédemment. $diff_A(f) = A(f) - bombé_A(f)$

Cette opération revient à réaliser une mise à plat du motif considéré.

De manière optionnelle on peut, préalablement à cette opération de soustraction, réaliser une opération de filtrage supplémentaire, de manière à extraire les valeurs de niveau de gris anormales susceptibles d'apparaître dans l'image du motif.

Pour ce faire, on encadre le motif considéré *A* dans une boite englobante de dimension réduite de manière à constituer des imagettes de petite taille contenant ledit motif en relief de couleur blanche, et une partie du fond de couleur noire, comme cela est illustré à la figure 14.

On veillera, comme précédemment, à ce que chaque boite englobante ne contienne qu'un seul motif. Dans le cas où ladite boite englobante contiendrait un motif d'un label donné et tout ou partie d'autre motifs de label différents, on peut au choix, changer la forme de la boite englobante ou, plus aisément, éliminer les parties de motifs dont le label est différent du label du motif considéré en remplaçant les valeurs de ces motifs par la valeur zéro correspondant à la valeur (noire) du fond.

Une fois ces zones sélectionnées, on localise dans l'image de départ f les pixels correspondant à l'imagette considérée *A*, et on effectue une ouverture morphologique de ladite zone à l'aide d'un élément structurant linéaire orienté dans la direction circonférentielle, noté $\gamma_{150,A}(f)$. On choisit un élément structurant de taille réduite dont le nombre de pixels correspond à une longueur de quelques millimètres. Dans le cas de l'exemple servant de support à la présente description, l'élément structurant retenu est de 150 pixels.

On effectue alors la soustraction entre l'imagette de la zone A contenue dans la l'image de départ et l'imagette contenue dans l'image du bombé ; $diff_A(f) = \gamma_{A,150}(f) - bombé_A(f)$ pour obtenir une imagette du motif mise à plat

Après avoir réalisé la mise à plat du motif ou de l'imagette contenant ledit motif, l'opération suivante consiste à calculer la valeur moyenne et l'écart type des valeurs des niveaux de gris des pixels du motif mis à plat ou de l'imagette mise à plat, et à comparer ces valeurs à des plages de valeurs ou à des seuils prédéterminées et représentatives des hauteurs moyennes des motifs que l'on cherche à identifier sur la surface du flanc du pneumatique.

De manière expérimentale, on considère que l'on obtient de bons résultats en retenant un intervalle correspondant à une variation de hauteur comprise entre 0,2mm et 0,3mm, pour la moyenne des niveaux de gris et un seuil correspondant à une variation de hauteur inférieure ou égale à 0,2mm pour l'écart type des niveaux de gris.

Les motifs dont les valeurs moyennes et les écarts types sont compris dans les limites convenues sont conservés dans l'image binaire, et les motifs dont les valeurs moyennes ne sont pas dans ces limites sont extraits de l'image binaire en ramenant les pixels qui forment ces motifs à la valeur zéro, de sorte qu'ils sont confondus avec la valeur noire du fond.

On obtient alors une image binaire corrigée, telle que représentée à la figure 15, où l'image $seg_2^{cor}$ correspond à l'image $seg_2$ corrigée en application des étapes de calcul détaillées ci-dessus. On observe que le pont entre les deux plaquettes a disparu.

L'image binaire finale s'obtient en faisant la somme ou encore l'union ensembliste des images binaires, corrigées ou non:

$$seg = seg_1 \cup seg_2^{cor} \cup seg_3$$ comme cela est illustré à la figure 16.

Il devient alors possible d'extraire les motifs et de procéder aux traitements ultérieurs de l'image en vue de déterminer la conformité du pneumatique.

L'exemple de mise en oeuvre de la méthode selon l'invention n'est pas limitatif et pourra être adapté selon les indications données pour répondre à l'analyse des pneumatiques de tailles et d'usage variés en prenant en compte les spécificités des motifs figurant sur le flanc.

**Revendications**

1. Méthode d'extraction des motifs de marquage en relief figurant sur la surface du flanc d'un pneumatique comprenant les étapes au cours desquelles :

A- on capture l'image tridimensionnelle de ladite surface du flanc en affectant à chaque pixel (i, j) de l'image une valeur de niveau de gris proportionnelle à l'élévation de ce point par rapport à ladite surface, pour obtenir une image de départ ($f$),
**caractérisée par** les étapes suivantes:
B- à l'aide d'éléments structurants linéaires de tailles successivement croissante et orientés dans la direction circonférentielle, on réalise une série d'ouvertures morphologiques de l'image ($f$) de la surface de départ ($\gamma_{150}(f)$, $\gamma_{500}(f)$, $\gamma_{7000}(f)$),
C- on soustrait de la valeur d'une image obtenue après ouverture morphologique avec un élément structurant, la valeur de l'image obtenue après ouverture morphologique à l'aide de l'élément structurant de taille immédiatement inférieure ($f-\gamma_{150}(f)$, $\gamma_{150}(f)-\gamma_{500}(f)$, $\gamma_{500}(f)-\gamma_{7000}(f)$), de manière à obtenir une succession d'images mises à plat par différence, en initialisant la procédure par la soustraction de l'image obtenue à l'aide de l'élément structurant de plus faible taille de l'image de départ ($f$),
D- on réalise un seuillage des images mises à plat par différence, pour obtenir des images binaires ($seg_1(f-\gamma_{150}(f))$, $seg_2(\gamma_{150}(f)-\gamma_{500}(f))$, $seg_3(\gamma_{500}(f)-\gamma_{7000}(f))$),
E- on fait l'union ensembliste des valeurs de chacune des images binaires pour obtenir une image binaire finale, dans laquelle seuls les motifs de marquage apparaissent en relief ($seg = seg_1 \cup seg_2 \cup seg_3$).

2. Méthode d'extraction selon la revendication 1, dans laquelle, préalablement à l'étape B, on déroule l'image de la surface du flanc dans un repère orthogonal (OXY) dans lequel l'axe des abscisses (OX) représente les valeurs circonférentielle, et l'axe des ordonnées (OY) représente les valeurs radiales.

3. Méthode d'extraction selon l'une des revendications 1 ou 2, dans laquelle on réalise trois itérations successives d'ouvertures morphologiques de l'image de la surface à l'aide d'un premier, d'un deuxième et d'un troisième élément structurant ($\gamma_{150}(f)$, $\gamma_{500}(f)$, et $\gamma_{7000}(f)$).

4. Méthode d'extraction selon la revendication 3, dans laquelle le premier élément structurant est formé d'un nombre de pixels correspondant à une longueur comprise entre 4 et 10 mm.

5. Méthode d'extraction selon la revendication 3, dans laquelle le deuxième élément structurant est formé d'un nombre de pixels correspondant à une longueur comprise entre 15 et 30 mm.

6. Méthode d'extraction selon la revendication 3, dans laquelle le troisième élément structurant est formé d'un nombre de pixels correspondant à une longueur comprise entre 200 et 400 mm.

7. Méthode d'extraction selon l'une des revendications 1 à 6 dans laquelle, à l'issue de l'étape C, on transforme au moins une image mise à plat en effectuant une ouverture morphologique à l'aide d'un élément structurant linéaire orienté dans la direction radiale, et on soustrait cette image résultante de ladite image mise à plat ($\rho_{500}(f-\gamma_{150}(f))$).

8. Méthode d'extraction selon la revendication 7 dans laquelle l'élément structurant est formé d'un nombre de pixels correspondant à une longueur comprise entre 15 et 30 mm.

9. Méthode d'extraction selon l'une des revendications 1 à 8, dans laquelle, au cours de l'étape D, on effectue un seuillage du niveau de gris correspondant à une variation de hauteur supérieure ou égale à 0,15mm.

10. Méthode d'extraction selon l'une des revendications 1 à 9, dans laquelle, à l'issue de l'étape D

- on identifie les motifs (A) disjoints dans l'image binaire de la surface,
- on déterminé l'image du bombé de la surface de départ ($bombé(f)$),
- pour un motif considéré, on soustrait de la valeur de niveau de gris des pixels formant ce motif dans l'image de départ, la valeur de niveau de gris des pixels correspondants à ce motif dans l'image du bombé ($diff_A(f) = \gamma_{A,150}(f)-bombé_A(f)$), de manière à obtenir une mise à plat du motif,
- on calcule la valeur moyenne et l'écart type des niveaux de gris dudit motif mis à plat,
- dans l'image binaire ($seg_i$), on supprime ce motif lorsque :

∘ la valeur moyenne des niveaux de gris n'est pas comprise dans un intervalle donné et

∘ l'écart type des niveaux de gris est supérieur à un seuil prédéterminé, de manière à obtenir une image binaire corrigée $\left(seg_i^{cor}\right),$ dans laquelle les motifs détectés à tort sont supprimés.

11. Méthode d'extraction selon la revendication 10, dans laquelle, pour déterminer le bombé de la surface du flanc (bombé(f)), on effectue une série d'ouvertures morphologiques de l'image de départ (f) à l'aide d'éléments structurants linéaires de taille croissante et orientés dans la direction circonférentielle (bombé(f) = $\phi_{17000}(\gamma_{7000}(\phi_{500}(\gamma_{500}(f))))$) de manière à obtenir une image du bombé de la surface dans laquelle les motifs en sailli et les objets en creux et en bosse sont supprimés.

12. Méthode d'extraction selon la revendication 11, dans laquelle on effectue successivement une ouverture morphologique de l'image de départ à l'aide d'un élément structurant linéaire formé d'un nombre de pixels correspondant à une longueur comprise entre 4 et 10 mm ($\gamma_{500}(f)$), une fermeture morphologique de l'image précédente à l'aide d'un élément structurant formé d'un nombre de pixels correspondant à une longueur comprise entre 4 et 10 mm ($\phi_{500}(\gamma_{500}(f))$), une ouverture morphologique de l'image précédente à l'aide d'un élément structurant formé d'un nombre de pixels correspondant à une longueur comprise entre 200 et 400 mm ($\gamma_{7000}(\phi_{500}(\gamma_{500}(f)))$), et une fermeture morphologique de l'image précédente ($\phi_{17000}(\gamma_{7000}(\phi_{500}(\gamma_{500}(f))))$) à l'aide d'un élément structurant formé d'un nombre de pixels correspondant à une longueur comprise entre 500 et 800 mm.

13. Méthode d'extraction selon l'une des revendications 10 à 12, dans laquelle, avant de soustraire l'image du bombé de l'image de départ, on encadre chacun de ces motifs par une boite englobante formant une imagette ne contenant que le motif identifié considéré et on effectue la mise à plat de ladite imagette contenant ledit motif.

14. Méthode d'extraction selon l'une des revendications 10 à 13, dans laquelle l'intervalle de la moyenne des niveaux de gris correspond à une variation de hauteur comprise entre 0,2mm et 0,3mm,

15. Méthode d'extraction selon l'une des revendications 10 à 13 dans laquelle la valeur du seuil de l'écart type des niveaux de gris correspond à une variation de hauteur inférieure ou égale à 0,2mm.

**Patentansprüche**

1. Verfahren zum Extrahieren der Reliefmarkierungsmuster auf der Oberfläche der Flanke eines Reifens, das die Schritte umfasst, im Laufe derer:

A- man das dreidimensionale Bild der Oberfläche der Flanke erfasst, indem man jedem Pixel (i, j) des Bilds einen Graustufenwert anteilsmäßig zu der Höhenlage dieses Punkts in Bezug auf die Oberfläche zuweist, um ein Ausgangsbild (f) zu erzielen, **gekennzeichnet durch** die folgenden Schritte:

B- mit Hilfe linearer strukturierender Elemente mit nacheinander steigender Größe und die in die Umfangsrichtung ausgerichtet sind, Ausführen einer Reihe morphologischer Öffnungen des Bilds (f) der Ausgangsoberfläche ($\gamma_{150}(f)$, $\gamma_{500}(f)$, $\gamma_{7000}(f)$),

C- Subtrahieren von dem Wert eines Bilds, das nach dem morphologischen Öffnen mit einem strukturierenden Element erzielt wurde, des Werts des erzielten Bilds nach morphologischem Öffnen mit Hilfe des strukturierenden Elements mit einer unmittelbar kleineren Größe ($f-\gamma_{150}(f)$, $\gamma_{150}(f)-\gamma_{500}(f)$, $\gamma_{500}(f)-\gamma_{7000}(f)$) derart, dass eine Abfolge von Bildern erzielt wird, die **durch** Differenz abgeflacht sind, indem die Subtraktionsvorgehensweise des mit Hilfe des strukturierenden Elements erzielten Bilds mit kleinster Größe von dem Ausgangsbild (f) initiiert wird,

D- Ausführen einer Schwellenwertbestimmung der durch Differenz abgeflachten Bilder, um binäre Bilder ($seg_1(f-\gamma_{150}(f))$, $seg_2(\gamma_{150}(f))-\gamma_{500}(f)$), $seg_3(\gamma_{500}(f)-\gamma_{7000}(f))$), zu erzielen,

E- Ausführen der Mengenunion der Werte jedes der binären Bilder, um ein abschließendes binäres Bild zu erzielen, in dem nur die Markierungsmuster im Relief erscheinen ($seg = seg_1 \cup seg_2 \cup seg_3$).

2. Extraktionsverfahren nach Anspruch 1, bei dem man vor dem Schritt B das Bild der Oberfläche der Flanke in einem orthogonalen Bezugspunkt (OXY), in dem die Achse der Abszissen (OX) die Umfangswerte darstellt und die Achse der Ordinaten (OY) die radialen Werte darstellt, abrollt.

3. Extraktionsverfahren nach einem der Ansprüche 1 oder 2, bei dem man drei aufeinanderfolgende Iterationen morphologischer Öffnungen des Bilds der Oberfläche mit Hilfe eines ersten, eines zweiten und eines dritten strukturierenden Elements $\gamma_{150}(f)$, $\gamma_{500}(f)$ und $\gamma_{7000}(f)$) ausführt.

4. Extraktionsverfahren nach Anspruch 3, bei dem das erste strukturierende Element aus einer Anzahl von Pixeln gebildet ist, die einer Länge zwischen 4 und 10 mm entspricht.

5. Extraktionsverfahren nach Anspruch 3, bei dem das zweite strukturierende Element aus einer Anzahl von Pixeln gebildet ist, die einer Länge zwischen 15 und 30 mm entspricht.

6. Extraktionsverfahren nach Anspruch 3, bei dem das dritte strukturierende Element aus einer Anzahl von Pixeln gebildet ist, die einer Länge zwischen 200 und 400 mm entspricht.

7. Extraktionsverfahren nach einem der Ansprüche 1 bis 6, bei dem man nach dem Schritt C mindestens ein abgeflachtes Bild umformt, indem man eine morphologische Öffnung mit Hilfe eines linearen strukturierenden Elements ausführt, das in die radiale Richtung ausgerichtet ist, und man dieses resultierende Bild von dem abgeflachten Bild subtrahiert $(\rho_{500}(f-\gamma_{150}(f))$.

8. Extraktionsverfahren nach Anspruch 7, bei dem das strukturierende Element aus einer Anzahl von Pixeln, die einer Länge zwischen 15 und 30 mm entspricht, gebildet ist.

9. Extraktionsverfahren nach einem der Ansprüche 1 bis 8, bei dem man im Laufe des Schritts D eine Schwellenwertbestimmung der Graustufe, die einer Höhenvariation größer oder gleich 0,15 mm entspricht, ausführt.

10. Extraktionsverfahren nach einem der Ansprüche 1 bis 9, bei dem man nach dem Schritt D

   - die getrennten Muster (A) in dem binären Bild der Oberfläche identifiziert,
   - das Bild der Wölbung der Ausgangsoberfläche (*bombé(f)*) bestimmt,
   - für ein betreffendes Muster von dem Graustufenwert der Pixel, die dieses Muster in dem Ausgangsbild bilden, den Graustufenwert der Pixel, die diesem Muster in dem Bild der Wölbung entsprechen $(diff_A(f))=\gamma_{A,150}(f)-bombé_A(f)$, subtrahiert, so dass man ein Abflachen des Musters erzielt,
   - den Mittelwert und den Typunterschied der Graustufenniveaus des abgeflachten Musters berechnet,
   - in dem binären Bild (*seg_i*) dieses Muster weglässt, wenn

      • der Mittelwert der Graustufenniveaus nicht in einem gegebenen Bereich liegt, und

      • der Typunterschied der Graustufenniveaus größer ist als ein vorbestimmter Schwellenwert, so dass man ein korrigiertes binäres Bild $(seg_i^{cor})$ erzielt, in dem die zu Unrecht erfassten Muster weggelassen sind.

11. Extraktionsverfahren nach Anspruch 10, bei dem man zum Bestimmen der Wölbung der Oberfläche der Flanke (*bombé(f)*) eine Reihe morphologischer Öffnungen des Ausgangsbilds *(f)* mit Hilfe strukturierender linearer Elemente mit zunehmender Größe und die in die Umfangsrichtung ausgerichtet sind $(bombé(f) = \phi_{17000}(\gamma_{7000}(\phi_{500}(\gamma_{500}(f)))))$, derart ausführt, dass man ein Bild der Wölbung der Oberfläche erzielt, in dem die vorstehenden Muster und vertieften Objekte und Höckerobjekte weggelassen sind.

12. Extraktionsverfahren nach Anspruch 11, bei dem man nacheinander eine morphologische Öffnung des Ausgangsbilds mit Hilfe eines strukturierenden linearen Elements, das aus einer Anzahl von Pixeln gebildet ist, die einer Länge zwischen 4 und 10 mm $(\gamma_{500}(f))$ entspricht, ein morphologisches Schließen des vorhergehenden Bilds mit Hilfe eines strukturierenden Elements, das aus einer Anzahl von Pixeln gebildet ist, die einer Länge zwischen 4 und 10 mm $(\phi_{500}(\gamma_{500}(f)))$ entspricht, eine morphologische Öffnung des vorhergehenden Bilds mit Hilfe eines strukturierenden Elements, das aus einer Anzahl von Pixeln gebildet ist, die einer Länge zwischen 200 und 400 mm entspricht $(\gamma_{7000}(\phi_{500}(\gamma_{500}(f))))$, und ein morphologisches Schließen des vorhergehenden Bilds $\phi_{17000}(\gamma_{7000}(\phi_{500}(\gamma_{500}(f))))$ mit Hilfe eines strukturierenden Elements, das aus einer Anzahl von Pixeln gebildet ist, die einer Länge zwischen 500 und 800 mm entspricht, ausführt.

13. Extraktionsverfahren nach einem der Ansprüche 10 bis 12, bei dem man vor dem Subtrahieren des Bilds der Wölbung des Ausgangsbilds jedes dieser Muster durch eine umschließende Box umrahmt, die ein Miniaturbild bildet, das nur das betreffende identifizierte Muster enthält, und man das Abflachen des Miniaturbilds, das das Muster enthält, ausführt.

14. Extraktionsverfahren nach einem der Ansprüche 10 bis 13, bei dem der Durchschnittsbereich der Graustufen einer Höhenvariation, die zwischen 0,2 mm und 0,3 mm liegt, entspricht.

15. Extraktionsverfahren nach einem der Ansprüche 10 bis 13, bei dem der Schwellenwert des Typunterschieds der Graustufen einer Höhenvariation kleiner oder gleich 0,2 mm entspricht.

## Claims

1. Method of extraction of the relief marking patterns featuring on the surface of the sidewall of a tyre comprising the steps in the course of which:

   A- the three-dimensional image of the said surface of the sidewall is captured while assigning to each pixel (i, j) of the image a grey level value proportional to the elevation of this point with respect to the said surface, so as to obtain a starting image ($f$),
   **characterized in that** it comprises the following steps:
   B- with the aid of linear structuring elements of successively increasing sizes and oriented in the circumferential direction, a series of morphological openings of the image ($f$) of the starting surface ($\gamma_{150}(f)$, $\gamma_{500}(f)$, $\gamma_{7000}(f)$) is carried out,
   C- from the value of an image obtained after morphological opening with a structuring element is subtracted the value of the image obtained after morphological opening with the aid of the structuring element of immediately lower size ($f-\gamma_{150}(f)$, $\gamma_{150}(f)-\gamma_{500}(f)$, $\gamma_{500}(f)-\gamma_{7000}(f)$), so as to obtain a succession of images flattened by differencing, while initializing the procedure by the subtraction of the image obtained with the aid of the structuring element of smaller size from the starting image ($f$),
   D- a thresholding of the images flattened by differencing is carried out, so as to obtain binary images ($seg_1(f-\gamma_{150}(f))$, $seg_2(\gamma_{150}(f)-\gamma_{500}(f))$, $seg_3(\gamma_{500}(f)-\gamma_{7000}(f))$),
   E- the set-theoretic union of the values of each of the binary images is performed so as to obtain a final binary image, in which only the marking patterns appear in relief ($seg = seg_1 \cup seg_2 \cup seg_3$).

2. Method of extraction according to Claim 1, in which, prior to step B, the image of the surface of the sidewall is unfolded in an orthogonal reference frame (OXY) in which the abscissa axis (OX) represents the circumferential values, and the ordinate axis (OY) represents the radial values.

3. Method of extraction according to one of Claims 1 or 2, in which three successive iterations of morphological openings of the image of the surface are carried out with the aid of a first, of a second and of a third structuring element ($\gamma_{150}(f)$, $\gamma_{500}(f)$, and $\gamma_{7000}(f)$).

4. Method of extraction according to Claim 3, in which the first structuring element is formed of a number of pixels corresponding to a length lying between 4 and 10 mm.

5. Method of extraction according to Claim 3, in which the second structuring element is formed of a number of pixels corresponding to a length lying between 15 and 30 mm.

6. Method of extraction according to Claim 3, in which the third structuring element is formed of a number of pixels corresponding to a length lying between 200 and 400 mm.

7. Method of extraction according to one of Claims 1 to 6 in which, on completion of step C, at least one flattened image is transformed by performing a morphological opening with the aid of a linear structuring element oriented in the radial direction, and this resulting image is subtracted from the said flattened image ($\rho_{500}(f-\gamma_{150}(f))$).

8. Method of extraction according to Claim 7 in which the structuring element is formed of a number of pixels corresponding to a length lying between 15 and 30 mm.

9. Method of extraction according to one of Claims 1 to 8, in which, in the course of step D, a thresholding of the grey level corresponding to a height variation of greater than or equal to 0.15 mm is performed.

10. Method of extraction according to one of Claims 1 to 9, in which, on completion of step D

    - the disjoint patterns (A) in the binary image of the surface are identified,
    - the image of the camber of the starting surface (camber($f$)) is determined,
    - for a pattern considered, from the grey level value of the pixels forming this pattern in the starting image is subtracted the grey level value of the pixels corresponding to this pattern in the image of the camber ($diff_A(f) = \gamma_{A150}(f)-camber_A(f)$), so as to obtain a flattening of the pattern,
    - the mean value and the standard deviation of the grey levels of the said flattened pattern are calculated,
    - in the binary image ($seg_i$), this pattern is deleted when:

      o the mean value of the grey levels does not lie in a given interval and
      o the standard deviation of the grey levels is greater than a predetermined threshold, so as to obtain a corrected binary image ($seg_i^{cor}$), in which the wrongly detected patterns are deleted.

11. Method of extraction according to Claim 10, in which, to determine the camber of the surface of the sidewall (*camber(f)*), a series of morphological openings of the starting image (*f*) is performed with the aid of linear structuring elements of increasing size and oriented in the circumferential direction (*camber(f)* = $\phi_{17000}(\gamma_{7000}(\phi_{500}(\gamma_{500}(f))))$) so as to obtain an image of the camber of the surface in which the salient patterns and the sunken and raised objects are deleted.

12. Method of extraction according to Claim 11, in which there are performed successively a morphological opening of the starting image with the aid of a linear structuring element formed of a number of pixels corresponding to a length lying between 4 and 10 mm ($\gamma_{500}(f)$), a morphological closing of the previous image with the aid of a structuring element formed of a number of pixels corresponding to a length lying between 4 and 10 mm ($\phi_{500}(\gamma_{500}(f))$), a morphological opening of the previous image with the aid of a structuring element formed of a number of pixels corresponding to a length lying between 200 and 400 mm ($\gamma_{7000}(\phi_{500}(\gamma_{500}(f)))$), and a morphological closing of the previous image ($\phi_{17000}(\gamma_{7000}(\phi_{500}(\gamma_{500}(f))))$) with the aid of a structuring element formed of a number of pixels corresponding to a length lying between 500 and 800 mm.

13. Method of extraction according to one of Claims 10 to 12, in which, before subtracting the image of the camber from the starting image, each of these patterns is enclosed by an encompassing box forming an imagette containing only the identified pattern considered and the said imagette containing the said pattern is flattened.

14. Method of extraction according to one of Claims 10 to 13, in which the interval of the average of the grey levels corresponds to a height variation lying between 0.2 mm and 0.3 mm.

15. Method of extraction according to one of Claims 10 to 13, in which the value of the threshold of the standard deviation of the grey levels corresponds to a height variation of less than or equal to 0.2 mm.

**Fig 1**      $f$

**Fig 2**      $\gamma_{150}(f)$

**Fig 3**      $f - \gamma_{150}(f)$

**Fig 4**      $seg_1(\rho_{500}(f - \gamma_{150}(f)))$

**Fig 5** $\gamma_{500}(f)$

**Fig 6** $\gamma_{150}(f) - \gamma_{500}(f)$

**Fig 7** $seg_2(\gamma_{150}(f) - \gamma_{500}(f))$

**Fig 8** $\gamma_{7000}(f)$

Fig 9    $\gamma_{500}(f) - \gamma_{7000}(f)$

Fig 10    $seg_3(\gamma_{500}(f) - \gamma_{7000}(f))$

Fig 11    $seg = seg_1 \cup seg_2 \cup seg_3$

A

**Fig 12**

**Fig 13**

$$\phi_{17000}(\gamma_{7000}(\phi_{500}(\gamma_{500}(f))))$$

**Fig 14**

$A$

$seg_2$

**Fig 15**

$seg_2^{cor}$

**Fig 16**

$$seg^{cor} = seg_1 \cup seg_2^{cor} \cup seg_3^{cor}$$

**RÉFÉRENCES CITÉES DANS LA DESCRIPTION**

**Documents brevets cités dans la description**

* EP 2077442 A1